(19) Europäisches Patentamt
European Patent Office
Office européen des brevets

(11) **EP 2 276 805 B1**

(12) **EUROPEAN PATENT SPECIFICATION**

(45) Date of publication and mention
of the grant of the patent:
**27.12.2017 Bulletin 2017/52**

(21) Application number: **09725249.8**

(22) Date of filing: **26.03.2009**

(51) Int Cl.:
***C08L 23/00*** *(2006.01)*

(86) International application number:
**PCT/EP2009/053617**

(87) International publication number:
**WO 2009/118390 (01.10.2009 Gazette 2009/40)**

(54) **INFILL MATERIAL**

FÜLLUNGSMATERIAL

MATÉRIAU DE REMPLISSAGE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **27.03.2008 EP 08102981**

(43) Date of publication of application:
**26.01.2011 Bulletin 2011/04**

(73) Proprietor: **Borealis Plastomers B.V.**
**6412 EZ Heerlen (NL)**

(72) Inventors:
• **WELZEN, Leonardus Jacobus Johannus Wilhelmus**
**6129JC Urmond (NL)**
• **BRULS, Wilhelmus Gerardus Marie**
**6243 BE Geulle (NL)**
• **BUIJSCH OP DEN, Francois Antoine Marie**
**6367 HN Voerendaal (NL)**

(74) Representative: **Lux, Berthold**
**Maiwald Patentanwalts GmbH**
**Elisenhof**
**Elisenstraße 3**
**80335 München (DE)**

(56) References cited:
**WO-A-2007/039191**

• **DEUTSCHES INSTITUT FUER NORMEN: "Sportplaetze" DIN 18035-7, XX, XX, 1 June 2002 (2002-06-01), pages 1-36, XP002284769**
• **BRELAND R D: "STANDARD TEST METHODS AND PERFORMANCE STANDARDS FOR SYNTHETIC TURF PLAYING SURFACES AND MATERIALS" ASTM SPECIAL TECHNICAL PUBLICATION, PHILADELPHIA, PA, 1 January 1994 (1994-01-01), pages 103-113, XP009029925 ISSN: 0066-0558**

**Description**

The present invention relates to foamed polymeric particles having a dynamic modulus ($E_d$) of between 0.5 and 2.0 MPa and a phase angle (tan $\delta$) of between 0.19 and 0.36. The invention also relates to a process for the preparation of foamed polymeric particles having the desired value of $E_d$ and tan $\delta$. The invention furthermore relates to the use of the (so-prepared) foamed polymeric particles, especially as infill material for (artificial) turf fields.

Artificial turf fields (or grass fields) for playing soccer and other ball games are becoming more and more popular. Two main components of such fields are a) artificial grass fibers, and b) an infill material, generally of a polymeric nature, spread out between the fibers up to a certain height. Another component that may be present is e.g. sand for anchoring the field to the ground. The whole is generally laid upon a functional underground that also may contribute to the total performance of the field.

A polymeric material used as infill material usually is a resilient material. Its function is to damp the shocks that ankles and knees of the players may suffer when they run and jump on the field. Further the infill material must have sufficient elasticity so as to give the playing ball bouncing characteristics similar to a natural grass field.

The (artificial) turf field must retain these properties for an acceptable period of time, since removing and replacing the infill material is a costly and cumbersome task.

The international football association FIFA has imposed certain test criteria with which an artificial turf field has to comply with. These criteria comprise values that mainly depend on the infill material, e.g. for the shock absorption, vertical impression, energy restitution, vertical rebound and further criteria that are mainly associated with the artificial grass fibers applied. In addition also the physical sensation, the 'feel', that players experience is tested in practice. Infill materials possessing the required combination of properties have been found to show viscoelastic properties, i.e. part of the energy fed to it, e.g. by a running person or a bouncing ball, should be given back, but also part of it must be absorbed. The reader is referred to the "Handbook of test methods and requirements for artificial football surfaces" from the FIFA, issued in January 2005.

In present practice the properties of the infill material are determined on test fields specifically laid out for this purpose and using equipment specifically designed for this purpose. Fields, the properties of which do not comply with the required criteria have to be cleared away, which involves serious efforts and a waste of material. An even greater problem lies in the longer-term behavior of the infill material. It has appeared that in several cases infill material that initially passes the requirements deteriorates in a relatively short time to an unacceptable level, causing the infill material to have to be removed and replaced over the full area of a playing field. Also in natural grass fields it is possible to use infill material, and the same requirements apply as for an artificial turf field.

In WO 2007/039191 a method has been described for determining the suitability of a material as infill material for (artificial) turf fields that can be used to select infill material that complies with the requirements. It also provides sufficient information to predict the long-term behavior of the tested material.

In that method a sample of the intended material, present in a sample holder at a predetermined temperature, is subjected to a combination of a static force and a dynamic force superimposed on said static force, said dynamic force being imposed with a frequency chosen in the range of 0.01 to 100 Hz, measuring at least the dynamic force and the corresponding impression of the sample, and deriving relevant parameters from the measured data. For further details of that method the reader is referred to said WO'191 publication.

According to that publication the optimum ranges for the dynamic modulus ($E_d$) and the phase angle tan $\delta$, at a measurement frequency of 1Hz, and at room temperature (23°C), are:

$$0.5 \text{ MPa} \leq E_d \leq 2.0 \text{ MPa,}$$

and

$$0.19 \leq \tan \delta \leq 0.36.$$

These ranges reflect the selection criteria found to match with the present requirements for (artificial) turf fields.

In the art several polymeric materials (both thermoplastic and non-thermoplastic) have been suggested to be useful as infill material. Unfortunately, their mechanical properties are not that such that they match with, and lye in, the above-mentioned optimum ranges.

The object of the present invention are foamed polymeric particles that satisfy the $E_d$ and tan $\delta$ requirements. This is achieved by foamed polymeric particles.

The polymeric material thereof preferably is being selected from the group comprising thermoplastic elastomers, thermoplastic vulcanizates, and plastomers. Also flexible polyolefins (like e.g. EVA's (ethylene/vinyl acetate copolymers) have shown to be suitable. Also mixtures of the above polymeric materials, and with other polymers can be suitable while adhering to the above given requirements.

Herewith a match is achieved between material properties (based on the intrinsic properties of the polymeric material) and the shape of the foamed polymeric particles,
resulting in a match with the requirements for the use as infill in applications for (artificial) turf fields.

When the polymeric material is of a foamed nature, The foam can either be closed-celled or open-celled. The benefit of a closed cell structure is that atmospheric conditions (especially rain) will not influence the internal structure of the polymeric material, when in use as infill material.

By deviating from a spherical, solid structure of the foamed polymeric particles the $E_d$-value of the material is lowered in combination with an increase in the tan $\delta$-value. By using the present information of this invention, the skilled man in the art can tailor the properties of the material to be in conformity with the requirements of the $E_d$ and tan $\delta$ parameters.

All type of non-spherical shapes can be applied, like star-shaped, tubular, curved-shaped. A preference is for the tubular shape, as such a shape can be easily produced in a continuous extrusion process.

The type of polymeric material to be used in the present invention is preferably of a thermoplastic nature. This has the benefit, compared to non-thermoplastic materials, that it can be easily made, as well as easily be reprocessed when removed from an (artificial) turf field where it has been used for a certain period of time. As such, this material is a "green" product (can be reworked/re-used). This thermoplastic material is preferably selected from the group comprising thermoplastic elastomers, thermoplastic vulcanizates, and plastomers.

With preference, the thermoplastic material is an ethylene or propylene based plastomer. With more preference it is an ethylene/butylene or ethylene/octene plastomer.

When the material selection is directed to thermoplastic elastomers, the preference is that the polymeric material is a styrene-based thermoplastic elastomer. Examples thereof are present in the market, like SBS, SEBS, SEPS, etc.

When as starting material a thermoplastic vulcanizate (TPV) is selected, there is a preference for a product on the basis of a polypropylene and an EAM/EADM rubber (a rubber based on Ethylene, an Alpha-olefin, (and a Diene) Monomer). Such types of TPV are also available in the market.

In order to be useful as infill material in (artificial) turf fields, the dimensions of the material must be fit to be incorporated between the (artificial) grass filaments. That means that the largest dimension of the particle is in general not exceeding 15 mm; more preferred the largest dimension does not exceed 5 mm. When the infill is in the form of a tube, the outer diameter of the tube is preferably between 2 and 5 mm. Preferably, the ratio between the inner and outer diameter of the tube is between 0.40 and 0.80.

An additional advantage of the present invention can be achievedwhen the foamed polymeric particles, suitable as infill material are of a non-spherical
nature. More preferred, the foamed polymeric particles are of a tubular
nature.

Also a mixture of the above described types of suitable polymeric materials can be applied.

When applying the teaching of the present invention still does not result in foamed polymeric particles fulfilling the requirements of $E_d$ and tan $\delta$, the skilled man is advised to modify the starting material by lowering or raising the $E_d$ thereof depending on the deviation of the $E_d$ with the desired value; the methods of which this can be achieved are, as such, known in the art. The starting material preferably has an $E_d$ and tan $\delta$ value that lye in a parallelogram formed by an $E_d$ value between 1 and 10 MPa at a tan $\delta$ value of 0.05, and an $E_d$ value of between 0.5 and 4.5 MPa at a tan $\delta$ value of 0.19. More preferably, the starting material to be used in the process of the present invention has an $E_d$ and tan $\delta$ value that lye in a parallelogram formed by an $E_d$ value between 2 and 7.5 MPa at a tan $\delta$ value of 0.05, and an $E_d$ value of between 0.9 and 3.5 MPa at a tan $\delta$ value of 0.19.

The present invention also relates to a process for the preparation of the above described foamed polymeric particles, suitable as an infill material. Polymeric material, used as infill material is in the state-of-the-art generally made by extruding the selected starting material to a strand and cutting them into the desired length, or forming them to a desired spherical shape. In all these cases the infill is still a fully solid material. In the process of the present invention a polymeric material, preferably selected from the group comprising thermoplastic elastomers, thermoplastic vulcanizates, and plastomers is foamed to the desired value of $E_d$ and tan $\delta$;

The resulting product is found well suitable as infill material in (artificial) turf fields.

By simple experimentation during the foaming step, one can determine to which extend the foaming has to take place in order to comply, in the end product, with the required $E_d$ and tan $\delta$ values.

When using a foaming process, the amount of the chemical foaming agent (like aluminum tri hydroxide (ATH); magnesium hydroxide; azo-compounds) or physical foaming agent (like water or an evaporative gas (like nitrogen, carbon dioxide, water, air)) used can be varied in order to influence the degree of foaming. When applying water as a physical foaming agent, it is preferred that the polymeric material is under-water extruded and foamed.

Simple testing the so-produced material according to the method described in WO '191 will reveal whether that material is suitable for use as infill material. Preferably the starting material to be used in the process of the present invention has an $E_d$ and tan $\delta$ value that lye in a parallelogram formed by an $E_d$ value between 1 and 10 MPa at a tan $\delta$ value of 0.05, and an $E_d$ value and an $E_d$ value of between 0.5 and 4.5 MPa at a tan $\delta$ value of 0.19. More preferably, the starting material to be used in the process of the present invention has an $E_d$ and tan $\delta$ value that lye in a parallelogram formed by an $E_d$ value between 2 and 7.5 MPa at a tan $\delta$ value of 0.05, and an $E_d$ value of between 0.9 and 3.5 MPa at a tan $\delta$ value of 0.19. The skilled man in the art is aware of the measures he should take to modify an originally not suitable product to a material having the desired, above indicated, starting properties (by e.g. blending with other polymeric materials, by the addition of softeners (e.g. oils) or inorganic or organic fillers).

The (produced) foamed polymeric particles according to the present invention can be used as infill in e.g. (artificial) turf fields, like hockey fields, korfball fields, cricket fields. These fields may be having natural or artificial grass. With preference the foamed polymeric particles (produced) according to the present invention can be used as infill on soccer fields, as the foamed polymeric particles of the present invention presently comply with the present requirements.

It has been found that the foamed polymeric particles (produced) according to the present invention not only fulfil the indicated requirements for infill material when freshly produced, but that over time and under use, the properties do not deteriorate so much that replacement of the material from the turf field become necessary; it can thus be used for an acceptable period of time.

The foamed polymeric particles (produced) according to the present invention can also find its use in other applications than the use as infill as above described in detail. Specifically it can be used in those situations where energy and/or shock absorption are desired (e.g. egg-protection systems; packing systems).

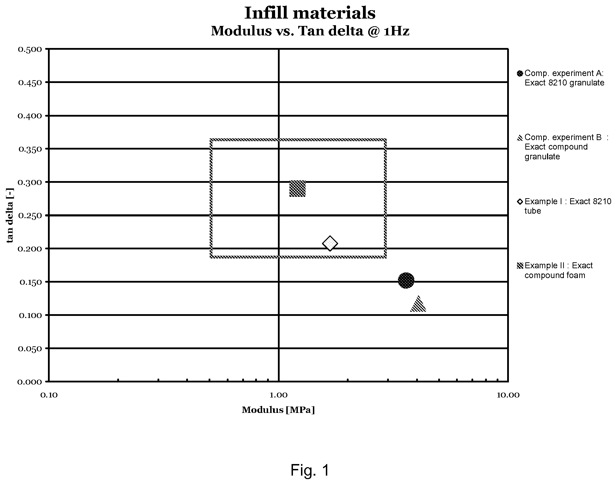

The invention will now be illustrated with Examples I-II and comparative experiments A-B that show the benefits of the invention. The results thereof are given in Fig. 1.

Example I

Exact® 8210 (density 882 kg/m$^3$, MFI 10 dg/min; from DexPlastomers) was melted in a ZSK30 twin screw extruder at a temperature setting of 170°C and a screw speed of 100 rpm. A special developed die was used to prepare a tube. With this set-up tubes were produced, cooled down and cut in pieces with a length of 5 mm and an outer diameter of 4 mm. and a wall thickness of 0.7 mm. The results of the dynamic mechanical measurements, as described in WO 2007/039191, are summarized in Table 1 and presented in Figure 1.

Comparative experiment A

In this experiment Exact® 8210 granulate, with a diameter of 3.5 mm was used to determine the dynamic mechanical behavior.

Example II

92 wt.% of an Exact® compound, based on 60 wt.% Exact® 8230 (density 882 kg/m$^3$, MFI 30 dg/min from DexPlastomers), 30 wt.% calcium carbonate; and 10 wt.% oil and 8 wt.% of a foaming masterbatch (50 wt.% sodium carbonate in polyethylene), was melted and mixed in a single screw extruder set-up with static mixers, at a temperature setting of 170°C and a screw speed of 20 rpm. In the static mixers, T-setting 115-115-95-95°C, the melt was cooled down to a temperature just above the melting point of the compound. The foamed strands were cut in dimensions of a length of 3 mm and a diameter of 2 mm. The results of the dynamic mechanical measurements are summarized in Table 1 and presented in Figure 1.

Comparative experiment B

In this experiment the Exact® compound granulate of Example 2, with a diameter of 1.5 mm was used to determine the dynamic mechanical behavior.

Table 1. Results dynamical mechanical measurements

| Sample | Material | $E_d$(MPa) | Tan $\delta$ | Compacting |
|---|---|---|---|---|
| Example I | Exact® 8210 tube | 1.680 | 0.208 | ++ |
| Comparative exp. A | Exact® 8210 granulate | 3.600 | 0.152 | ++ |
| Example II | Exact® compound foam | 1.211 | 0.290 | ++ |

(continued)

| Sample | Material | $E_d$(MPa) | Tan $\delta$ | Compacting |
|---|---|---|---|---|
| Comparative exp. B | Exact® compound granulate | 4.067 | 0.117 | ++ |

Compacting:

++ (Excellent): Virtually all granules/powder flow individually from the sample holder

+ (Reasonable) 75-95% of the granules/powder flow individually from the sample holder

+/- (Insufficient) 25-75% of the granules/powder flow individually from sample holder, remainder sticks together as a cake

- (Bad) More than 75% of the sample sticks together as a cake

**Claims**

1. Foamed polymeric particles having a dynamic modulus ($E_d$) of between 0.5 and 2.0 MPa and a phase angle (tan $\delta$) of between 0.19 and 0.36.

2. Foamed polymeric particles according to claim 1, wherein the polymeric material thereof is selected from the group comprising thermoplastic elastomers, thermoplastic vulcanizates, and plastomers.

3. Foamed polymeric particles according to anyone of claims 1-2, wherein the particles are tubular-shaped.

4. Foamed polymeric particles according to anyone of claims 1-3, wherein the $E_d$ is between 0.8 and 1.3 MPa.

5. Foamed polymeric particles according to anyone of claims 1-4, wherein the tan $\delta$ is between 0.25 and 0.32.

6. Foamed polymeric particles according to anyone of claims 1-5, wherein the polymeric material is an ethylene or propylene based plastomer.

7. Foamed polymeric particles according to claims 1-6, wherein the polymeric material is an ethylene/butylene or ethylene/octene plastomer.

8. Foamed polymeric particles according to anyone of claims 1-5, wherein the polymeric material is a styrene-based thermoplastic elastomer.

9. Foamed polymeric particles according to anyone of claims 1-5, wherein the polymeric material is a thermoplastic vulcanizate on the basis of polypropylene and an EAM/EADM rubber.

10. Foamed polymeric particles according to anyone of claims 1-9, wherein the largest dimension of the particles does not exceed 5 mm.

11. Foamed polymeric particles according to claim 3, wherein the outer diameter of the tube is between 2 and 5 millimeter.

12. Foamed polymeric particles according to anyone of claims 3 and 11 , wherein the ratio between the inner and outer diameter of the tube is between 0.40 and 0.80.

13. Foamed polymeric particles according to anyone of claims 1-12, wherein the polymeric particles are closed-cell foamed.

14. Foamed polymeric particles according to anyone of claims 1-12, wherein the polymeric particles are open-cell foamed.

**15.** Foamed polymeric particles according to anyone of claims 1-14, wherein the particles are both non-spherical and foamed.

**16.** Process for the preparation of foamed polymeric particles according to anyone of claims 1-14, wherein a polymeric material selected from the group comprising thermoplastic elastomers, thermoplastic vulcanizates, and plastomers is foamed to the desired value of $E_d$ and tan $\delta$.

**17.** Process according to claim 16, wherein the polymeric material is under-water extruded and foamed.

**18.** Process according to anyone of claims 16 or 17, wherein the starting material has an $E_d$ and tan $\delta$ value that lie in a parallelogram formed by an $E_d$ value between 1 and 10 MPa at a tan $\delta$ value of 0.05, and an $E_d$ value of between 0.5 and 4.5 MPa at a tan $\delta$ value of 0.19.

**19.** Process according to claim 18, wherein the starting material has an $E_d$ and tan $\delta$ value that lie in a parallelogram formed by an $E_d$ value between 2 and 7.5 MPa at a tan $\delta$ value of 0.05, and an $E_d$ value of between 0.9 and 3.5 MPa at a tan $\delta$ value of 0.19.

**20.** Use of the foamed polymeric particles according to anyone of claims 1-15, or prepared according to anyone of claims 16-19 as infill in (artificial) turf fields.

**21.** Use according to claim 20, wherein the (artificial) turf field is a soccer field.

**Patentansprüche**

**1.** Geschäumte Polymerteilchen mit einem dynamischen Modul ($E_d$) von zwischen 0,5 und 2,0 MPa und einem PhasenWinkel (tan $\delta$) von zwischen 0,19 und 0,36.

**2.** Geschäumte Polymerteilchen nach Anspruch 1, wobei das Polymermaterial davon aus der Gruppe, umfassend thermoplastische Elastomere, thermoplastische Vulkanisat und Plastomere, ausgewählt ist.

**3.** Geschäumte Polymerteilchen nach einem der Ansprüche 1-2, wobei die Teilchen röhrenförmig sind.

**4.** Geschäumte Polymerteilchen nach einem der Ansprüche 1-3, wobei der $E_d$ zwischen 0,8 und 1,3 MPa ist.

**5.** Geschäumte Polymerteilchen nach einem der Ansprüche 1-4, wobei der tan $\delta$ zwischen 0,25 und 0,32 liegt.

**6.** Geschäumte Polymerteilchen nach einem der Ansprüche 1-5, wobei das Polymermaterial ein auf Ethylen oder Propylen basierendes Plastomer ist.

**7.** Geschäumte Polymerteilchen nach Ansprüchen 1-6, wobei das Polymermaterial ein Ethylen/Butylen- oder Ethylen/Octen-Plastomer ist.

**8.** Geschäumte Polymerteilchen nach einem der Ansprüche 1-5, wobei das Polymermaterial ein Styrol-basiertes thermoplastisches Elastomer ist.

**9.** Geschäumte Polymerteilchen nach einem der Ansprüche 1-5, wobei das Polymermaterial ein thermoplastisches Vulkanisat auf der Basis von Polypropylen und einem EAM/EADM-Kautschuk ist.

**10.** Geschäumte Polymerteilchen nach einem der Ansprüche 1-9, wobei die größte Abmessung der Teilchen 5 mm nicht übersteigt.

**11.** Geschäumte Polymerteilchen nach Anspruch 3, wobei der Außendurchmesser des Rohrs zwischen 2 und 5 Millimeter liegt.

**12.** Geschäumte Polymerteilchen nach einem der Ansprüche 3 und 11, wobei das Verhältnis zwischen dem Innen- und Außendurchmesser des Rohrs zwischen 0,40 und 0,80 liegt.

**13.** Geschäumte Polymerteilchen nach einem der Ansprüche 1-12, wobei die Polymerteilchen geschlossenzellig geschäumt sind.

**14.** Geschäumte Polymerteilchen nach einem der Ansprüche 1-12, wobei die Polymerteilchen offenzellig geschäumt sind.

**15.** Geschäumte Polymerteilchen nach einem der Ansprüche 1-14, wobei die Teilchen sowohl nicht-kugelförmig als auch geschäumt sind.

**16.** Verfahren zur Herstellung von geschäumten Polymerteilchen nach einem der Ansprüche 1-14, wobei ein Polymermaterial, ausgewählt aus der Gruppe, umfassend thermoplastische Elastomere, thermoplastische Vulkanisate und Plastomere, zu dem gewünschten Wert von $E_d$ und tan $\delta$ geschäumt wird.

**17.** Verfahren nach Anspruch 16, wobei das Polymermaterial unter Wasser extrudiert und geschäumt wird.

**18.** Verfahren nach einem der Ansprüche 16 oder 17, wobei das Ausgangs-Material einen $E_d$- und tan $\delta$-Wert aufweist, der in einem Parallelogramm, gebildet durch einen $E_d$-Wert zwischen 1 und 10 MPa bei einem tan $\delta$-Wert von 0,05 und einen $E_d$-Wert von zwischen 0,5 und 4,5 MPa bei einem tan $\delta$-Wert von 0,19 liegt.

**19.** Verfahren nach Anspruch 18, wobei das Ausgangs-Material einen $E_d$- und tan $\delta$-Wert aufweist, der in einem Parallelogramm, gebildet durch einen $E_d$-Wert zwischen 2 und 7,5 MPa bei einem tan $\delta$-Wert von 0,05 und einen $E_d$-Wert von zwischen 0,9 und 3,5 MPa bei einem tan $\delta$-Wert von 0,19 liegt.

**20.** Verwendung der geschäumten Polymerteilchen nach einem der Ansprüche 1-15, oder hergestellt nach einem der Ansprüche 16-19 als Auffüllung auf (Kunst)-Rasen-Spielfeldern.

**21.** Verwendung nach Anspruch 20, wobei das (Kunst)-Rasen-Spielfeld ein Fußball-Feld ist.


**Revendications**

**1.** Particules polymères expansées présentant un module dynamique ($E_d$) compris entre 0,5 et 2,0 MPa et un angle de phase (tan $\delta$) compris entre 0,19 et 0,36.

**2.** Particules polymères expansées selon la revendication 1, dans lesquelles le matériau polymère de celles-ci est choisi dans l'ensemble comprenant les élastomères thermoplastiques, les vulcanisats thermoplastiques, et les plastomères.

**3.** Particules polymères expansées selon l'une quelconque des revendications 1 et 2, lesquelles particules sont de forme tubulaire.

**4.** Particules polymères expansées selon l'une quelconque des revendications 1 à 3, dans lesquelles l'$E_d$ est compris entre 0,8 et 1,3 MPa.

**5.** Particules polymères expansées selon l'une quelconque des revendications 1 à 4, dans lesquelles la tan $\delta$ est comprise entre 0,25 et 0,32.

**6.** Particules polymères expansées selon l'une quelconque des revendications 1 à 5, dans lesquelles le matériau polymère est un plastomère à base d'éthylène ou de propylène.

**7.** Particules polymères expansées selon l'une quelconque des revendications 1 à 6, dans lesquelles le matériau polymère est un plastomère d'éthylène/butylène ou d'éthylène/octène.

**8.** Particules polymères expansées selon l'une quelconque des revendications 1 à 5, dans lesquelles le matériau polymère est un élastomère thermoplastique à base de styrène.

**9.** Particules polymères expansées selon l'une quelconque des revendications 1 à 5, dans lesquelles le matériau polymère est un vulcanisat thermoplastique à base de polypropylène et d'un caoutchouc d'EAM/EADM.

**10.** Particules polymères expansées selon l'une quelconque des revendications 1 à 9, dans lesquelles la dimension la plus grande des particules ne dépasse pas 5 mm.

**11.** Particules polymères expansées selon la revendication 3, dans lesquelles le diamètre extérieur du tube est compris entre 2 et 5 millimètres.

**12.** Particules polymères expansées selon l'une quelconque des revendications 3 à 11, dans lesquelles le rapport entre le diamètre intérieur et le diamètre extérieur du tube est compris entre 0,40 et 0,80.

**13.** Particules polymères expansées selon l'une quelconque des revendications 1 à 12, lesquelles particules polymères sont expansées à cellules fermées.

**14.** Particules polymères expansées selon l'une quelconque des revendications 1 à 12, lesquelles particules polymères sont expansées à cellules ouvertes.

**15.** Particules polymères expansées selon l'une quelconque des revendications 1 à 14, lesquelles particules sont à la fois expansées et non sphériques.

**16.** Procédé pour la préparation de particules polymères expansées selon l'une quelconque des revendications 1 à 14, dans lequel un matériau polymère choisi dans l'ensemble comprenant les élastomères thermoplastiques, les vulcanisats thermoplastiques, et les plastomères, est expansé aux valeurs souhaitées d'$E_d$ et de tan $\delta$.

**17.** Procédé selon la revendication 16, dans lequel le matériau polymère est extrudé et expansé sous l'eau.

**18.** Procédé selon l'une quelconque des revendications 16 ou 17, dans lequel le matériau de départ présente des valeurs $E_d$ et tan $\delta$ qui se trouvent dans un parallélogramme formé par une valeur $E_d$ comprise entre 1 et 10 MPa à une valeur tan $\delta$ de 0,05, et une valeur $E_d$ comprise entre 0,5 et 4,5 MPa à une valeur tan $\delta$ de 0,19.

**19.** Procédé selon la revendication 18, dans lequel le matériau de départ présente des valeurs $E_d$ et tan $\delta$ qui se trouvent dans un parallélogramme formé par une valeur $E_d$ comprise entre 2 et 7,5 MPa à une valeur tan $\delta$ de 0,05, et une valeur $E_d$ comprise entre 0,9 et 3,5 MPa à une valeur tan $\delta$ de 0,19.

**20.** Utilisation des particules polymères expansées selon l'une quelconque des revendications 1 à 15, ou préparées conformément à l'une quelconque des revendications 16 à 19, en tant que remplissage dans des terrains en gazon (artificiel).

**21.** Utilisation selon la revendication 20, dans laquelle le terrain en gazon (artificiel) est un terrain de football.

**Infill materials**
**Modulus vs. Tan delta @ 1Hz**

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007039191 A

**Non-patent literature cited in the description**

- Handbook of test methods and requirements for artificial football surfaces. FIFA, January 2005